# EUROPÄISCHE PATENTANMELDUNG

(11) **EP 2 012 040 A2**
(43) Veröffentlichungstag der Anmeldung: **07.01.2009**
(21) Anmeldenummer: 08010322.9
(22) Anmeldetag: 06.06.2008
(51) Int. Cl.: F16F 9/56

(54) **Höhenverstellbarer Schwingungsdämpfer**

(30) Priorität: 02.07.2007 DE 102007030641
(71) Anmelder: ThyssenKrupp Bilstein Suspension GmbH, 58256 Ennepetal (DE)
(72) Erfinder: Fritz, Michael, Dr., 58339 Breckerfeld (DE)
(74) Vertreter: Adams, Steffen

(57) **Zusammenfassung**

Die Erfindung betrifft einen Schwingungsdämpfer für Kraftfahrzeuge mit einem Dämpferrohr (1), in dem ein an einer Kolbenstange (2) befestigter Arbeitskolben (3) angeordnet ist, einem das Dämpferrohr (1) verschließenden, die Kolbenstange (2) führenden Verschlußpaket (16) sowie einem das Dämpferrohr (1) zumindest abschnittsweise umschließenden Außenrohr (4), wobei das Außenrohr (4) außerhalb des Dämpferrohres (1) fest mit der Kolbenstange (2) verbunden ist. Um mit einfachen Mitteln eine Höhenverstellbarkeit des Schwingungsdämpfers zu erreichen, ohne dass für den Schwingungsdämpfer zusätzlicher Bauraum benötigt wird, wird erfindungsgemäß vorgeschlagen, dass zwischen dem Dämpferrohr (1) und dem Außenrohr (4) mindestens ein Dichtungselement (15) angeordnet ist, dass die Verbindung zwischen dem Außenrohr (4) und der Kolbenstange (2) fluiddicht ausgebildet ist und der von dem Außenrohr (4) und dem Dämpferrohr (1) umgrenzte Hohlraum (H) einen Anschluss (11) für die Einleitung eines Druckfluids aufweist.

## Beschreibung

Die Erfindung betrifft einen höhenverstellbaren Schwingungsdämpfer für Kraftfahrzeuge nach dem Oberbegriff des Patentanspruchs 1.

Derartige Schwingungsdämpfer sind aus der Praxis bekannt. Das das Dämpferrohr zumindest abschnittsweise umschließende Außenrohr dient bei diesen bekannten Schwingungsdämpfern dazu, eine hohe Biegesteifigkeit des gesamten Federbeins zu erreichen. Insbesondere bei leistungsstarken Sportwagen werden Schwingungsdämpfer dieser Bauart eingesetzt. Dabei weisen diese Sportwagen regelmäßig eine nur geringe Bodenfreiheit, d. h. einen geringen Abstand zwischen Fahrbahnoberfläche und Fahrzeugkarosserie, auf. Diese geringe Bodenfreiheit macht es schwierig, zum Beispiel über Fahrbahnerhöhungen oder Bordsteinkanten hinweg zu fahren. Dieses Problem verringert die Alltagstauglichkeit derartiger Sportwagen erheblich, weil insbesondere das Überfahren von Hindernissen in verkehrsberuhigten Bereichen oder zum Beispiel von Bordsteinen im Bereich von Tankstellenauffahrten erschwert wird. Das Überfahren solcher Hindernisse kann sogar unmöglich sein, wenn das Fahrzeug einen tiefliegenden Spoiler aufweist, der bei Sportwagen regelmäßig im Frontbereich des Fahrzeugs angeordnet ist und einen geringen Bodenabstand hat.

Der Erfindung liegt die Aufgabe zugrunde, auf technisch einfache Weise und ohne Bauraumveränderungen für den Einbau des Schwingungsdämpfers vornehmen zu müssen eine Höhenverstellung zu realisieren, durch die die Bodenfreiheit des Fahrzeugs variiert werden kann.

Diese Aufgabe wird gelöst durch einen Schwingungsdämpfer mit den Merkmalen des Patentanspruchs 1. Vorteilhafte Weiterbildungen sind in den Unteransprüchen angegeben.

Der Erfindung liegt die Erkenntnis zugrunde, dass es bei einem Schwingungsdämpfer mit den Merkmalen des OIberbegriffs des Patentanspruchs 1 möglich ist, eine Höhenverstellung auf einfache Weise zu realisieren, ohne dass Baraumveränderungen für den Einbau des Schwingungsdämpfers erforlech sind. Dadurch, dass zwischen dem Dämpferrohr und dem Außenrorh mindestens ein Dichtungselement angeordnet wird une die Verbindung zwischen dem Außenrorh und der Kolbenstange fluiddicht ausgebildet ist wird ein abgedichteter Hohlraum erzeugt, der von dem Außenrohr, dem Dämpferrohr und der fluiddichten Verbindung von Kolbenstange und Außenrohr umgrenzt ist. In diesen abgedichteten Hohlraum kann über einen Anschluss ein Druckfluid, wie z. B. Druckluft, eingeleitet werden. Dieses Druckfluid wirkt dann auf das verschiebbar im Außenrohr angeordnete Dämpferrohr ein, so dass das Dämpferrohr quasi als Kolben im dem Außenrohr verschoben wird. Auf diese Weise wird der Schwingungsdämpfer teleskopartig auseinander gefahren und der Abstand der Fahrzeugkarosserie von der Fahrbahnoberfläche vergrößert.

Durch Ablassen von Druckfluid durch den Anschluss kann anschließend der Abstand der Fahrzeugkarosserie von der Fahrbahnoberfläche wieder verringert werden.

Um die Verbindung zwischen Außenrohr und Kolbenstange fluiddicht auszubilden ist es erfindungsgemäß vorgesehen, dass in das Außenrohr an seinem dem Dämpferrohr abgewandten Ende eine Abschlussplatte eingeschweißt ist, die ein Loch zur Durchführung der Kolbenstange aufweist. Diese Abschlussplatte ist vorzugsweise über ihren gesamten Außenumfang mit der Innenwandung des Außenrohres verschweißt. Im Bereich des Loches, durch welches die Kolbenstange hindurchgeführt ist, ist ein zwischen der Kolbenstange und der Abschlussplatte wirksames Dichtelement angeordnet. Auf diese Weise wird der von dem Außenrohr und dem Dämpferrohr eingegrenzte Hohlraum fluiddicht gegen die Umgebung abgeschlossen.

Grundsätzlich wäre es auch möglich, die Abschlussplatte nicht über ihren gesamten Außenumfang, sondern nur Abschnitte des Außenumfangs der Abschlussplatte mit der Innenwandung des Außenrohres zu verschweißen. In diesem Fall müssten ein oder mehrere Dichtelemente vorgesehen werden, die zwischen der Abschlussplatte und dem Außenrohr wirksam sind, damit der Hohlraum fluiddicht abgedichtet ist.

Nach einer ersten Ausführungsform der Erfindung kann der Anschluss für die Einleitung des Druckfluids am Außenumfang des Außenrohres angeordnet sein.

Nach einer zweiten Ausführungsform der Erfindung ist der Anschluss für die Einleitung des Druckfluids in der Abschlussplatte angeordnet.

Im Folgenden wird die Erfindung an Hand einer Zeichnung näher erläutert. Im Einzelnen zeigen
- Figur 1: eine erste Ausführungsform des höhenverstellbaren Schwingungsdämpfers;
- Figur 2: eine gegenüber Figur 1 abgewandelte zweite Ausführungsform des höhenverstellbaren Schwingungsdämpfers.

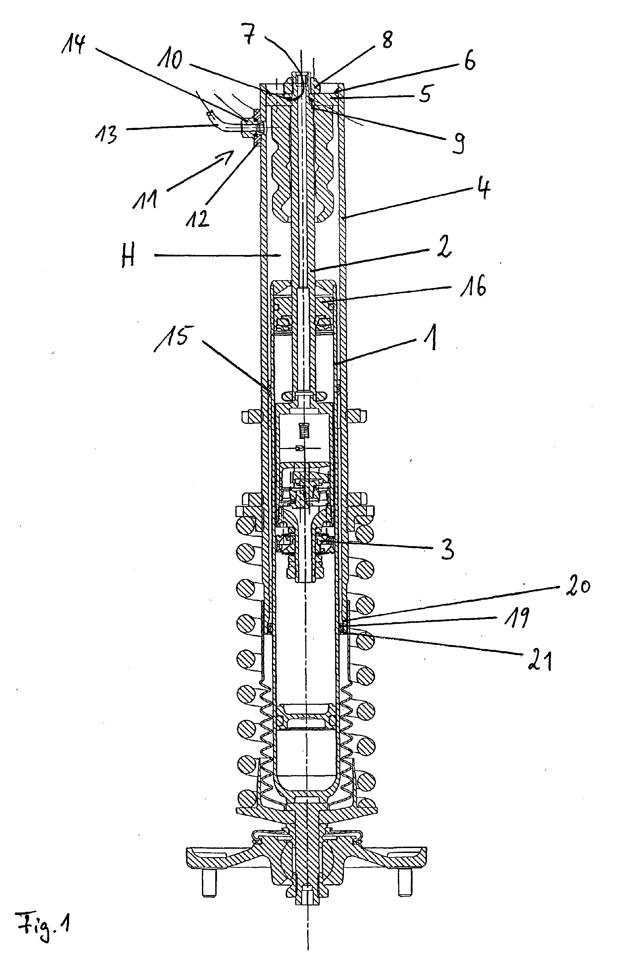

In Figur 1 ist ein höhenverstellbarer Schwingungsdämpfer gemäß einer ersten Ausführungsform der Erfindung dargestellt. Der Schwingungsdämpfer weist ein Dämpferrohr 1 auf, in dem ein an einer Kolbenstange 2 angeordneter Arbeitskolben 3 angeordnet ist. Der Schwingungsdämpfer weist darüber hinaus ein Außenrohr 4 auf, welches das Dämpferrohr 1 abschnittsweise umschließt. Das Außenrohr 4 ist an seinem dem Dämpferrohr 1 abgewandten Ende durch eine Abschlussplatte 5 verschlossen. Die Abschlussplatte 5 ist über eine an ihrem Umfang umlaufende Schweißnaht 6 mit der Innenwandung des Außenrohres 4 verschweißt.

Im Zentrum der Abschlussplatte 5 ist ein Loch 7 vorgesehen, durch welches die Kolbenstange 2 hindurchgeführt ist. Die Kolbenstange 2 weist an ihrem dem Dämpferrohr 1 abgewandten Ende einen Gewindeabschnitt auf, auf den eine Mutter 8 aufgeschraubt ist. Weiter weist die Kolbenstange 2 einen radialen Absatz 9 auf, mit dem sich die Kolbenstange gegen die Abschlussplatte 5 abstützt. Auf diese Weise wird die Kolbenstange 2 über die Mutter 8 und den Absatz 9 fest mit der Abschlussplatte 5 verbunden.

In der der Kolbenstange 2 zugewandten Oberfläche des Loches 7 in der Abschlussplatte 5 ist eine Nut vorgesehen, in die ein Dichtungselement 10, z.B. ein O-Ring eingesetzt ist. Durch dieses Dichtungselement und die umlaufende Schweißnaht 6 ist der von dem Außenrohr 4, dem Dämpferrohr 1 und der Abschlussplatte 5 eingegrenzte Hohlraum H gegenüber der Umgebung abgedichtet.

Am Außenumfang des Außenrohres 4 ist ein Anschluss 11 angeordnet, über den ein Druckfluid wie z.B. Druckluft in den Hohlraum H eingeleitet werden kann. Das Druckfluid wird von einem nicht dargestellten Druckfluidspeicher zur Verfügung gestellt. Der Druckfluidschlauch 13 ist an seiner dem Anschluss 11 abgewandten Seite mit dem Druckfluidspeicher verbunden. Grundsätzlich könnte auch ein flüssiges Druckmedium über den Anschluss 11 in den Hohlraum H eingeleitet werden. Im dargestellten Ausführungsbeispiel handelt es sich bei dem Anschluss 11 jedoch um einen Druckluftanschluss. Am Außenumfang des Außenrohres 4 ist ein Adapter 12 angeordnet, und der Druckluftschlauch 13 ist über eine Schraubverbindung 14 druckluftdicht mit dem Adapter 12 verbunden. In der Wand des Außenrohres 4 ist eine Öffnung vorhanden, über die das durch den Druckluftschlauch 13 strömende Druckfluid in den Hohlraum H gelangt. Der Adapter 12 ist druckdicht mit dem Außenrohr 4 verbunden, z.B. durch eine Schweiß-, Löt- oder Klebeverbindung.

In dem Bereich, in dem sich das Außenrohr 4 und das Dämpferrohr 1 überlappen, ist ein weiteres Dichtelement 15 angeordnet, welches zwischen der Innenwandung des Außenrohres 4 und der Aussenwandung des Dämpferrohres 1 dichtend wirksam ist. Durch dieses Dichtelement 15 wird der Hohlraum H dämpferrohrseitig dicht verschlossen. Durch die Schweißnaht 6, das Dichtungselement 10 an dem dem Dämpferrohr abgewandten Ende des Außenrohres 4 und das Dichtungselement 15, das zwischen Außenrohr 4 und Dämpferrohr 1 wirksam ist, wird somit ein fluiddicht geschlossener Hohlraum H erzeugt.

Durch die Einleitung des Druckfluids in den Hohlraum H über den Anschluss 11 wird der Hohlraum H unter einen Überdruck gesetzt. Aus diesem Überdruck resultiert eine Kraft, die auf das Dämpferrohr 1 über das Verschlusspaket 16 einwirkt, mit dem das Dämpferrohr 1 verschlossen ist. Da das Dämpferrohr 1 axial verschiebbar in dem Außenrohr 4 gehalten ist, kann auf diese Weise durch die Erhöhung des Druckes im Hohlraum H der Schwingungsdämpfer teleskopartig auseinander gefahren werden, so dass sich die Fahrzeugkarosserie anhebt und die Bodenfreiheit (d.h. der Abstand der Fahrzeugkarosserie von der Fahrbahnoberfläche) erhöht.

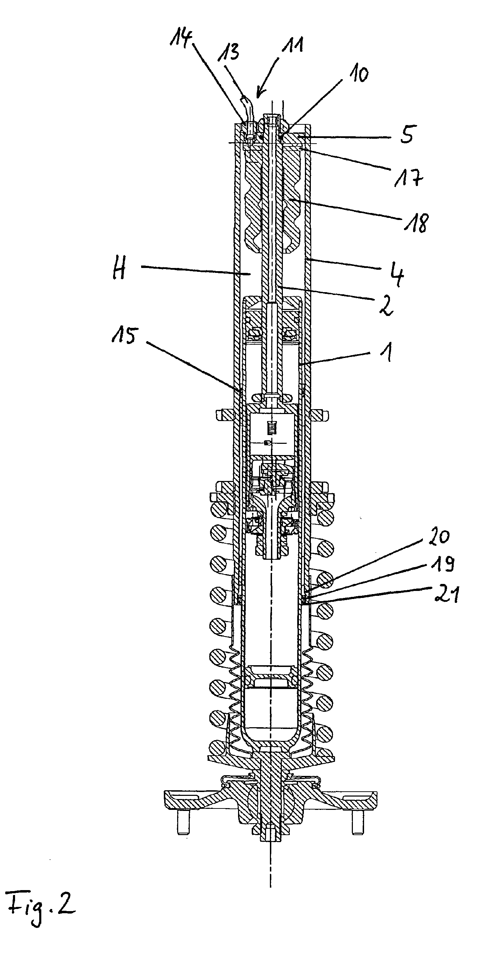

In Figur 2 ist ein zweites Ausführungsbeispiel des erfindungsgemäßen höhenverstellbaren Schwingungsdämpfers dargestellt. Die mit den in Figur 1 dargestellten Bauteilen übereinstimmenden Bauteile sind mit denselben Bezugszeichen bezeichnet.

Im Wesentlichen entspricht der Aufbau des Schwingungsdämpfers gemäß Figur 2 dem des Schwingungsdämpfers gemäß Figur 1. Der Unterschied zwischen den beiden Ausführungsformen der Erfindung besteht lediglich in der Art und Weise der Anordnung des Druckfluidanschlusses 11. Beim Ausführungsbeispiel gemäß Figur 2 ist der Druckfluidanschluss 11 nicht am Außenumfang des Außenrohres 4, sondern an der Abschlussplatte 5 angeordnet. Hierzu ist in der Abschlussplatte 5 ein Loch vorgesehen, in das der Druckfluidschlauch 13 über eine Verschraubung 14 eingesetzt ist. Die Verbindung der Abschlussplatte 5 mit dem Außenrohr 4 erfolgt in der gleichen Weise wie bei dem Beispiel gemäß Figur 1. Auch die Abdichtung des Hohlraums H gegenüber der Umgebung über das Dichtungselement 10, das im Ausführungsbeispiel als O-Ring ausgebildet ist, und das Dichtungselement 15 entspricht der Ausführungsform gemäß Figur 1.

Damit das Druckfluid in den Hohlraum H gelangen kann, ist eine Distanzscheibe 17 zwischen der Abschlussplatte 5 und dem Druckanschlagpuffer 18 angeordnet. Diese Distanzscheibe 17 weist zumindest im Bereich des Druckfluidanschlusses 11 eine Nut auf, durch die das Druckfluid in den Hohlraum H strömen kann.

Die Funktionsweise der Höhenverstellung ist bei dem Ausführungsbeispiel gemäß Figur 2 identisch mit der Funktionsweise bei dem Ausführungsbeispiel gemäß Figur 1.

Um das Dichtungselement 15 in axialer Richtung abzustützen und zu positionieren, wird dieses z.B. eingepresst und stützt sich dann an einer Fase oder Schulter an der Innenwand des Außenrohres 4 ab. Diese Fase oder Schulter kann dadurch erzeugt werden, dass der Innendurchmesser des Außenrohres 4 von der Seite der Abschlussplatte 5 aus gesehen größer ausgebildet (z.B. ausgedreht) ist als der restliche Innendurchmesser des Außenrohres 4. Alternativ kann auch ein Sprengring vorgesehen sein, der z.B. in eine Nut in der Innenwandung des Außenrohres 4 eingesetzt ist.

Optional kann bei beiden vorstehend beschriebenen Ausführungsformen der Erfindung zusätzlich zu dem Dichtungselement 15, das die Druckdichtigkeit des Hohlraums H bewirkt, ein weiteres Dichtungselement 19 an dem der Abschlussplatte 5 abgewandten Ende des Außenrohres 4 angeordnet werden. Dieses Dichtungselement 19 ist wiederum zwischen der Innenwand des Außenrohres 4 und der Außenwand des Dämpferrohres 1 wirksam und hat die Aufgabe, Schmutz von außen abzustreifen. Um das Dichtungselement 19 in axialer Richtung abzustützen ist einerseits ein radialer Absatz 20 an der Innenwandung des Außenrohres 4 angeordnet, andererseits ist ein Sprengring 21 vorgesehen, der in eine Nut in der Innenwandung des Außenrohres 4 eingesetzt ist.

Es besteht darüber hinaus bei einer dritten, in den Figuren nicht dargestellten Ausführungsform der Erfindung die Möglichkeit, auf das Dichtungselement 15 zu verzichten und nur das Dichtungselement 19 vorzusehen. Dann muss das Dichtungselement einerseits den Schmutz von außen abstreifen und andererseits muss das Dichtungselement 19 die fluiddichte Druckabdichtung gewährleisten, die in den voranstehend beschriebenen Ausführungsbeispielen das Dichtungselement 15 übernommen hat. Das Dichtungselement 19 muss in diesem Fall für eine Abdichtung zwischen dem Außenrohr 4 und dem Dämpferrohr 1 sorgen. Entfällt das Dichtungselement 15 und ist auf der dem Dämpferrohr 1 zugewandten Seite nur noch das Dichtungselement 19 vorgesehen, so wird der Hohlraum H größer als bei den Ausführungsbeispielen mit Dämpfungselement 15. Ein größerer Hohlraum H kann ggf. notwendig sein, wenn sich in dem durch das Dichtungselement 15 begrenzten Hohlraum H zu hohe Drücke beim Einfedern des Schwingungsdämpfers einstellen würden.

## Patentansprüche

1. Schwingungsdämpfer für Kraftfahrzeuge mit einem Dämpferrohr (1), in dem ein an einer Kolbenstange (2) befestigter Arbeitskolben (3) angeordnet ist, einem das Dämpferrohr (1) verschließenden, die Kolbenstange (2) führenden Verschlusspaket (16) sowie einem das Dämpferrohr (1) zumindest abschnittsweise umschließenden Außenrohr (4), wobei das Außenrohr (4) außerhalb des Dämpferrohres (1) fest mit der Kolbenstange (2) verbunden ist, **dadurch gekennzeichnet, dass** zwischen dem Dämpferrohr (1) und dem Außenrohr (4) mindestens ein Dichtungselement (15, 19) angeordnet ist, dass die Verbindung zwischen dem Außenrohr (4) und der Kolbenstange (2) fluiddicht ausgebildet ist und der von dem Außenrohr (4) und dem Dämpferrohr (1) umgrenzte Hohlraum (H) einen Anschluss (11) für die Einleitung eines Druckfluids aufweist.

2. Schwingungsdämpfer nach Anspruch 1, **dadurch gekennzeichnet, dass** in das Außenrohr (4) an seinem dem Dämpferrohr (1) abgewandten Ende eine Abschlussplatte (5) eingeschweißt ist, die ein Loch (7) zur Durchführung der Kolbenstange (2) aufweist, und dass im Bereich des Loches (7) ein zwischen der Kolbenstange (2) und der Abschlussplatte (5) wirksames Dichtelement (10) angeordnet ist.

3. Schwingungsdämpfer nach Anspruch 1 oder 2, **dadurch gekennzeichnet, dass** der Anschluss (11) am Außenumfang des Außenrohres (4) angeordnet ist.

4. Schwingungsdämpfer nach Anspruch 2, **dadurch gekennzeichnet, dass** der Anschluss (11) an der Abschlussplatte (5) angeordnet ist.
